# EUROPÄISCHE PATENTSCHRIFT

(11) **EP 1 077 861 B1**
(45) Veröffentlichungstag und Bekanntmachung des Hinweises auf die Patenterteilung: **22.09.2004**
(21) Anmeldenummer: 99917733.0
(22) Anmeldetag: 17.05.1999
(51) Int. Cl.: B62D 1/19

(54) **CRASHSYSTEM FÜR LENKSÄULE**
STEERING-COLUMN CRASH SYSTEM
SYSTEME DE SECURITE EN CAS DE COLLISION POUR COLONNE DE DIRECTION

(30) Priorität: 22.05.1998 CH 112898
(43) Veröffentlichungstag der Anmeldung: 28.02.2001
(73) Patentinhaber: ThyssenKrupp Presta AG, 9492 Eschen (LI)
(72) Erfinder: MARXER, Kurt, FL-9485 Nendeln (LI); MARXER, Markus, FL-9487 Gamprin (LI); LUTZ, Christian, A-6714 Nüziders (AT)
(74) Vertreter: Wegmann, Urs
(86) Internationale Anmeldenummer: PCT/CH1999/000208
(87) Internationale Veröffentlichungsnummer: WO 1999/061297

(56) Entgegenhaltungen:
- EP-A- 0 245 612
- EP-A- 0 289 049
- DE-A- 1 913 054
- GB-A- 1 390 889
- US-A- 5 390 955

## Beschreibung

Die Erfindung betrifft eine Lenkvorrichtung für Kraftfahrzeuge mit einer Lenkwelle nach dem Oberbegriff des Patentanspruches 1. Eine solche Vorrichtung ist aus der EP-A-289 049 bekannt.

Lenkvorrichtungen für Kraftfahrzeuge sind oft zweiteilig ineinander verschieblich ausgeführt, so dass im Falle einer Frontalkollision die Lenkvorrichtung den Fahrer nicht gefährdet, indem die Lenkvorrichtung beim Aufprall des Körpers auf das Lenkrad nachgibt und die Aufprallenergie absorbiert wird. Bei den bekannten Vorrichtungen ist üblicherweise das verschiebliche Lenkwellenrohr, welches die steuerradseitige Lenkwelle aufnimmt, in einem Gehäuse angeordnet, welches gegenüber dem Fahrzeugchassis durch Verschrauben in vorgegebener Position festgeklemmt ist. Die Verschraubung ist hierbei so ausgeführt, dass beim Aufprall das lenkradseitige Wellenende mit der verschraubten Gehäusekonsole in Achsrichtung, in verklemmtem Zustand, um einen bestimmten Weg verschiebbar ist. Die Aufprallenergie wird durch die Verklemmung entsprechend absorbiert. Um die Energieabsorption im Aufprallfall gleichförmiger zu gestalten, wurden zusätzlich Energieabsorptionselemente zwischen dem längsverschieblichen Wellenteil und dem Chassis des Fahrzeuges angeordnet. Ein Energieabsorptionselement, welches als aufreissbare Blechzunge ausgebildet ist, wurde beispielsweise aus der Patentschrift GB 1,390,889 bekannt.

Ein Nachteil der bekannten Crashsysteme für Lenksäulen besteht darin, dass einerseits die Losbrechkraft nicht in weiten Bereichen von der Energieabsorptionskraft im wesentlichen unabhängig definiert werden konnte. Das Absorptionsverhalten konnte auch nicht genau reproduzierbar vorgegeben werden.

Es ist Aufgabe der vorliegenden Erfindung ein Crashsystem für eine Lenksäulenanordnung vorzuschlagen, wodurch die Nachteile des Standes der Technik behoben werden. Insbesondere besteht die Aufgabe darin, ein Crashsystem für Lenksäulen zu realisieren, welches eine definierte Losbrechkraft und eine definierte Energieabsorption unter reproduzierbarem Verhalten ermöglicht. Ausserdem soll die Anordnung eine hohe Stabilität aufweisen und einfach montierbar und wirtschaftlich herstellbar sein.

Die Aufgabe wird erfindungsgemäss durch die Anordnung nach dem kennzeichnenden Teil des Anspruchs 1 gelöst. Die abhängigen Ansprüche definieren weitere vorteilhafte Ausführungsformen.

Eine erfindungsgemässe, besonders kostengünstige und platzsparende Lenksäulenanordnung mit Crashsystem für die Energieabsorption ergibt sich dadurch, dass die Lenkwelle in einem Führungskasten gelagert ist, welcher wiederum mit einer Konsole fest verbunden ist, wobei die Konsole seitlich flanschartige Gleitflächen aufweist, welche beispielsweise durch Verschrauben am Fahrzeugchassis festgeklemmt ist. Die Verklemmung ist derart ausgeführt, dass im Crashfall die Lenkwelle mit der Konsole nachgebend, beispielsweise um mehrere Zentimeter, verschoben werden kann. Das Energieabsorptionselement ist einerseits ortsfest mit dem Chassis verbunden und andererseits, wo die Energieabsorption statt findet, über die Konsole mit der Lenkwelle verbunden. Das Absorptionselement wird vorzugsweise als Blechteil mit Aufreisslasche ausgeführt, welches beispielsweise bügelförmig als Haltebügel ausgebildet zwischen dem Konsolenflansch und dem Chassis montiert ist. Diese Ausführungsform hat den grossen Vorteil, dass die Befestigung der Anordnung am Chassis mit nur zwei Befestigungsmitteln, vorzugsweise zwei Schrauben, möglich ist. Dies vereinfacht die Ausführung ganz wesentlich und erlaubt auch ein rasches Montieren, was sich positiv auf die Gesamtkosten auswirkt. Die Anzugsmomente der Schrauben liegen hierbei mit Vorteil im Bereich von 15 bis 35 Nm. Diese sehr einfache Ausführung der Anordnung und insbesondere die Möglichkeit die ganze Anordnung mit nur zwei Befestigungsschrauben ohne separate Konsolenführung zu befestigen, ermöglicht auch in einfachen Anwendungsfällen den Einsatz ohne die vorerwähnten speziellen Losbrechelemente. In diesem Fall ist aber die definierte Trennung zwischen Losbrechkraft und Energieabsorption weniger eindeutig, dafür ist aber die Anordnung dann besonders kostengünstig realisierbar. Zur Erhöhung der Biegesteifigkeit der Anordnung wird erfindungsgemäss vorgeschlagen, dass im Bereich der Klemmmittel zusätzliche Mittel vorgesehen werden welche eine Verspannung der Halterung, im federelastischen Bereich, ermöglicht. Diese Biegeverspannung der Anordnung erlaubt grössere Belastungen aufzunehmen bei kleineren Verformungsgraden, auch wenn die Konsolenanordnung beispielsweise als einfache Blech konstruktion durch beispielsweise stanzen und biegen hergestellt wird. Diese Biegeverspannung der Konsolenanordnung mit dem Absorptionselement ermöglicht auch eine einfache Befestigung mit genügend Stabilität durch beispielsweise nur zwei Schrauben, welche je an einer Seite der Konsole angebracht sind.

Die Biegeverspannung wird dadurch ermöglicht, dass beispielsweise zwischen den Gleitflächen, beabstandet von den Klemmbefestigungen, Distanzelemente vorgesehen werden, welche beim Klemmbefestigen die Biegeverspannung hervorrufen. Solche Erhebungen können einige zehntel mm bis einige mm betragen. Diese können in Lenkwellenachsenrichtung oder auch seitlich zu den Befestigungselementen vorgesehen werden.

In einer weiteren vorteilhaften Ausführungsform wird die Anordnung so ausgeführt, dass die Losbrechkraft von der Energieabsorptionskraft im Crashfall beim Verschieben der Lenkwelle im Aufprallsfall entkoppelt wird.

Die Verklemmung soll also im Crashfall sofort gelöst werden, wozu ein sogenanntes Losbrechelement dient, um die Aufprallenergie nach dem Losbrechen der Verklemmung im Wesentlichen auf ein Energieabsorptionselement abzugeben. Damit wird erreicht, dass die Energieabsorption über den definierten Verschiebeweg im Wesentlichen nicht mehr durch undefinierte Klemmkräfte beeinflusst wird und die Absorptionswirkung gezielt durch die Ausführung des Absorptionselementes vorgebbar ist.

Für eine Ausführungsform des Losbrechelements werden dazu im Bereich der Klemmbefestigung, wo die grossen Klemmkräfte zwischen Gehäusekonsole und dem stationären Chassisteil auftreten, die durch die Verklemmung aneinander gepressten Flächenteile gegenüber der Gleitrichtung leicht geneigt, d. h. unter einem bestimmten Keilwinkel so angeordnet, dass bereits bei einem kurzen Verschiebeweg die ursprüngliche Verklemmung sofort vermindert wird, indem die beiden Keilflächenteile abhängig von der Winkelneigung auseinanderfahren. Auf diese Weise wird bei einem Aufprall schon nach einer Verschiebung von einigen Zehnteln mm die Verklemmung losgebrochen und die weitere Verschiebung wird nicht mehr durch undefinierte Klemmkräfte bestimmt. Die Gehäusekonsole, welche das Lenkwellenrohr fixiert, ist über einen Aufreissstreifen mit dem Chassis verbunden. Die Ausführung dieses Aufreissstreifens bestimmt nun im wesentlichen den Grad und den Verlauf des Energieabsorptionsverhaltens. Durch entsprechende Dimensionierung dieser Aufreisslasche kann das Energieabsorptionsverhalten entsprechend optimal schonend für den Fahrer ausgelegt werden.

Eine weitere bevorzugte Ausführung besteht darin, dass im Bereich der zusammengepressten Gleitflächen beidseitig der Flächen Erhöhungen angeordnet sind, welche sich gegenseitig über eine kurze Wegstrecke abstützen, womit die Gleitfläche im Wesentlichen in den kurzen Berührungszonen der Erhebungen ausgebildet ist und im Verschiebefall, das heisst im Losbrechfall, gleitet die eine Erhebung bereits nach einer kurzen Wegstrecke, beispielsweise von einigen Millimetern, von der anderen Erhebung herunter und erzeugt somit im Crashfall das gewünschte Losbrechen. Bei dieser Ausführung kann die Biegeverspannung durch entsprechende Dimensionierung der Gleitflächenteile einfach erzeugt werden, indem bei der Klemmbefestigung die Verspannung durch elastische Deformation erzeugt wird, bei Bedarf bis zum definierten Anschlag der gegenüberliegenden, geklemmten Teile.

Eine weitere besonders einfache, bevorzugte Ausführungsform eines Losbrechelementes besteht darin, dass mindestens in einem Teilbereich der geklemmten Flächenteile diese gegenüberliegenden Klemmflächen so abgetreppt ausgeführt sind, dass nach einem kurzen Verschiebeweg die Klemmkraft aufgehoben wird.

Die Erfindung wird nun nachfolgend anhand von Ausführungsbeispielen mit schematischen Figuren näher erläutert. Es zeigen:
- Fig. 1a: eine Seitenansicht der erfindungsgemässen Halteanordnung für Lenksäulen
- Fig. 1b: eine Seitenansicht der Halteanordnung für Lenksäulen in eingebautem Zustand für den Deformationstest.
- Fig. 2a: ein Querschnitt durch die Halteanordnung gemäss Fig. 1
- Fig. 2b: eine Detaildarstellung der Klemmbefestigung im Querschnitt
- Fig. 3a: eine Detaildarstellung einer biegeverspannten Klemmflächenanordnung im Längsschnitt mit geneigten Klemmflächen
- Fig. 3b: eine Aufsicht der Klemmanordnung im Detail gemäss Fig. 3a
- Fig. 4: ein Crashkraftmessdiagramm, welches das Verhalten gemäss dem Stand der Technik zeigt
- Fig. 5: ein Crashkraftmessdiagramm, welches das Verhalten mit einem Losbrechelement zeigt
- Fig. 6: eine Detaildarstellung einer weiteren, biegeverspannten Klemmflächenanordnung im Längsschnitt mit Erhebungen als Distanzelemente zwischen den Gleitflächen
- Fig. 7: eine Detaildarstellung einer weiteren Klemmflächenanordnung im Längsschnitt mit Abtreppungen im Klemmbereich
- Fig. 8: ein Richttestmessdiagramm, welches das Deformationsverhalten gemäss dem Stand der Technik zeigt
- Fig. 9: ein Richttestmessdiagramm, welches das Verhalten mit einer biegeverspannten Halteanordnung zeigt

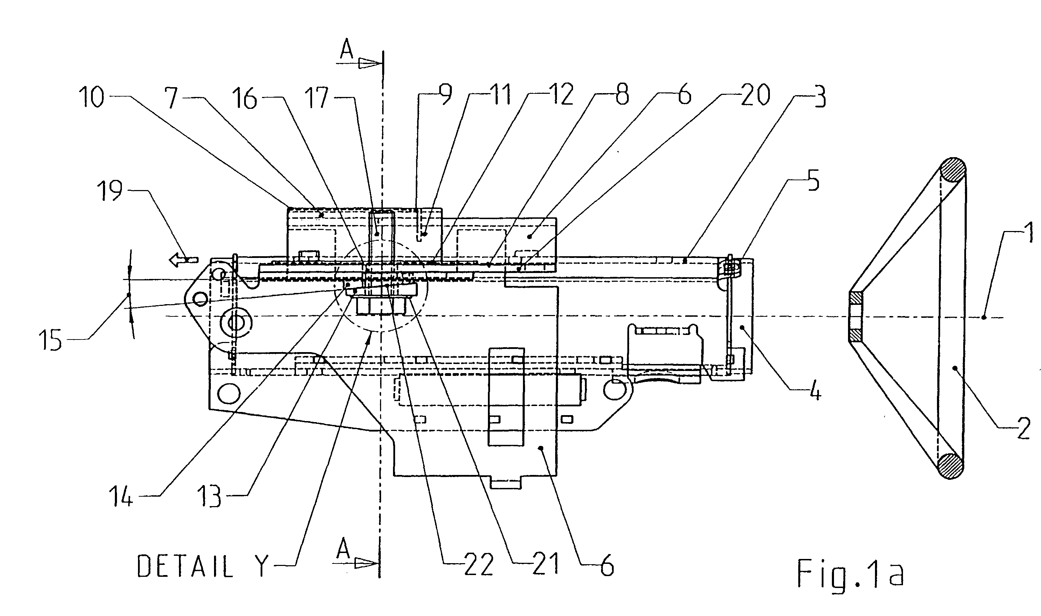

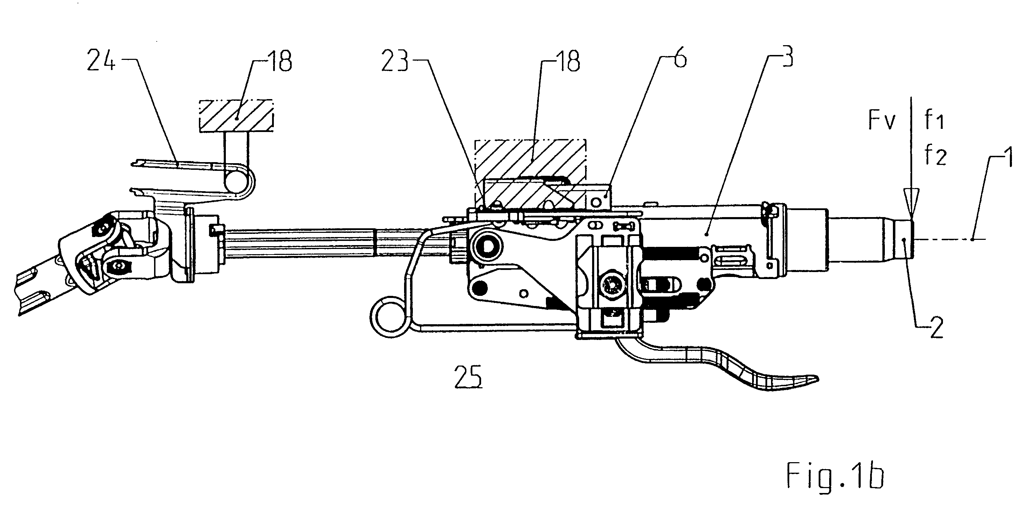

Eine Lenkwelle mit der Lenkwellenachse 1 ist mit einem Lenkrad 2 verbunden und in einem Führungskasten 3 gelagert, welcher, wie dies in Figur 1 dargestellt ist, mit einer Konsole 6 fest, beispielsweise geklemmt, verbunden ist. Der Führungskasten 3 kann zusätzlich höhen- und/oder längsverstellbar angeordnet werden. Die Konsole 6 wiederum ist am Chassis 18 des Fahrzeuges befestigt. Die Welle 1 ist für den Crashfall ineinander verschieblich ausgeführt, womit auch die Konsole 6 für den Crashfall etwa in einem Bereich von bis zu 50 mm, gegenüber dem Chassis 18, längsverschiebbar gelagert werden muss. Die Konsole 6 ist vorzugsweise U-förmig ausgebildet und umschliesst den aufzunehmenden Führungskasten 3 mindestens teilweise. Das Lager-Führungsteil 4 ist beispielsweise durch Halterungen 5 zwischen dem Konsolenteil 6 fixiert. Seitlich der Konsole 6 sind beispielsweise Gleitflächen 8 beidseitig angeordnet, welche einen Längsschlitz 20 aufnehmen. Dieser ist als Laufschlitz 20 ausgebildet und dient zur Aufnahme der Befestigungselemente 13, 16, 17 wie auch Bolzen oder vorzugsweise eine Verschraubung 17.

Die Konsole 6 ist vorzugsweise als Blechteil ausgeführt, welches besonders kostengünstig hergestellt werden kann, wenn dieses ausgestanzt wird und als Biegeteil ausgeführt wird. Neben dem Kostenvorteil hat dies auch den Vorteil, dass eine höhere Biegesteifheit möglich ist als z.B. bei Schweisskonstruktionen.

Durch die Verschraubung 17 wird die Konsole 6 an dem Chassis 18 so festgeschraubt, dass im Aufprallfall die Lenkwelle mit dem Führungskasten 3 innerhalb der Laufschlitzlänge verschieblich ist. Um die Verklemmung auch bei geringen Verschiebungswegen sofort loszubrechen, ist im Endbereich des Laufschlitzes 20 in der Ausgangsklemmposition die eine konsolenseitige Klemmfläche 22, mit Vorteil, unter einem Keilwinkel 15 geneigt als Keilschuh 14 ausgeführt. Die schraubenseitige andere Keilfläche 22 ist als Gleitschuh 13 ebenfalls unter dem Keilwinkel 15 geneigt ausgeführt. Der Gleitschuh 13 ist vorzugsweise so ausgebildet, dass er im Laufschlitz 20 im Verschiebefall gleitet. Da die Klemmflächen gegenüber der Klemmrichtung nun nicht mehr unter 90° stehen ist ein sofortiges Losbrechen der Klemmkraft auch bei kurzen Verschiebewegen möglich. Geeignete Keilwinkel sind von 2° bis 15°, vorzugsweise von 3° bis 8°.

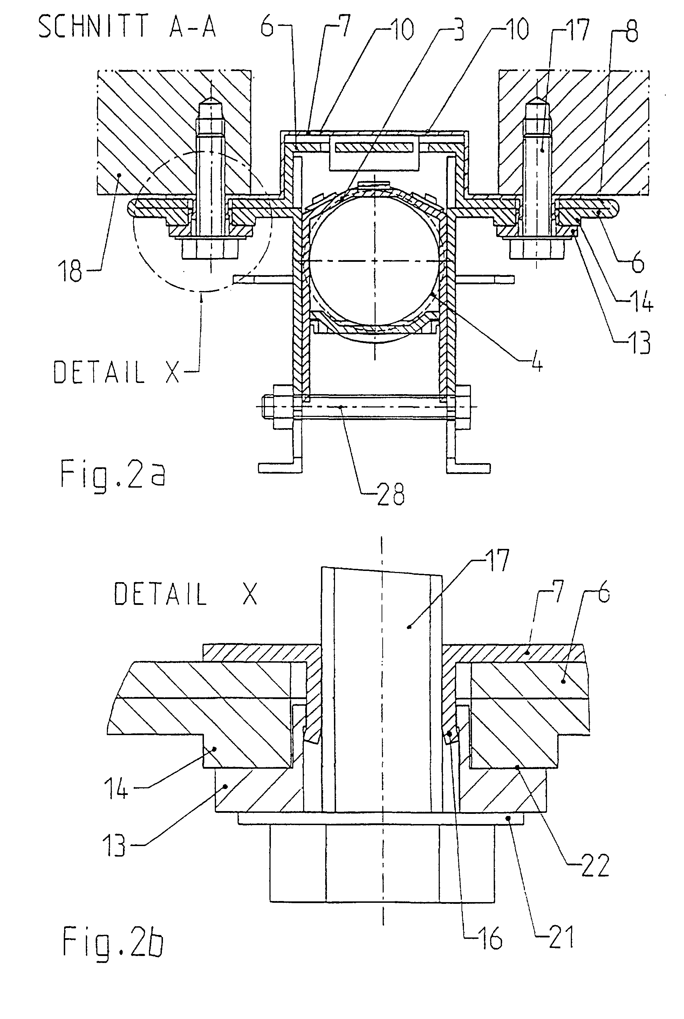

Die Konsole 6 ist beispielsweise direkt mit der Verschraubung 17 am Chassis 18 festgeschraubt, wobei der Gleitschuh 13 vorzugsweise schraubkopfseitig mit einer Unterlegscheibe 21 angeordnet ist. In Figur 2 ist die Anordnung im Querschnitt dargestellt, woraus die bevorzugte Befestigungsweise beidseitig der Wellenachse 1 am Chassis 18 dargestellt ist. Der Keilschuh 14 kann beispielsweise mit seiner Keilfläche direkt in die Konsole 6 eingearbeitet sein. Dieser lässt sich aber einfacher und präziser herstellen, wenn er als separates, scheibenförmiges Teil hergestellt wird und an der Konsole 6 befestigt wird.

Zur definierten Festlegung des Energieabsorptionsverhaltens wird zusätzlich ein Energieabsorptionselement 9 vorgesehen, welches vorzugsweise als Blechteil mit Aufreissstreifen und Haltelasche 9 ausgebildet ist. Vorteilhafterweise wird das Blechteil 7 als Haltebügel 7 ausgebildet, welches die U-förmige Konsole 6 im oberen Bereich umschliesst und mit der Verklemmung der Konsole 6 am Chassis 18 ortsfest in der Ausgangsposition verbleibend fixiert ist. Der Aufreissstreifen 9 wird mit Vorteil im oberen flachen U-förmig ausgebildeten Blechteil des Haltebügels 7 vorgesehen. Hierbei ist der Aufreissstreifen 9,10 als Teil des Haltebügels 7 so gegen die Konsole 6 gebogen, dass die Haltelasche 9 gegenüber der Konsole fixiert werden kann, beispielsweise geklemmt oder mit einer Schweissverbindung 11. Der Aufreissstreifen mit Haltelasche 9,10 befindet sich zwischen Kerbbahnen und wird eingestellt durch die Materialdicke des Reissbügelbleches, durch die Materialfestigkeit, sowie durch die Rollbreite mit entsprechendem Rollradius. Eventuell ist es erwünscht, beispielsweise durch Variieren der Rollbreite, das Absorptionskraftprofil über den Weg variieren zu können.

Die vorerwähnte konstruktive Ausführung der ganzen Halteanordnung, in dem der Haltebügel 7 mit den Gleitflächen 12 zwischen dem Konsolenflansch 6, 8 und dem Chassis 18 geklemmt wird, weist auch besondere Vorteile auf ohne die Verwendung zusammen mit den speziellen Losbrechelementen 13, 14, 22, 26, 27, 29. Sie ermöglicht eine einfache Montage bei kostengünstiger Ausführung, gutem Betriebsverhalten und hoher Stabilität der Anordnung, insbesondere dann, wenn die Anordnung, wie bevorzugt, nur mit zwei Schrauben 17 am Chassis 18 befestigt wird.

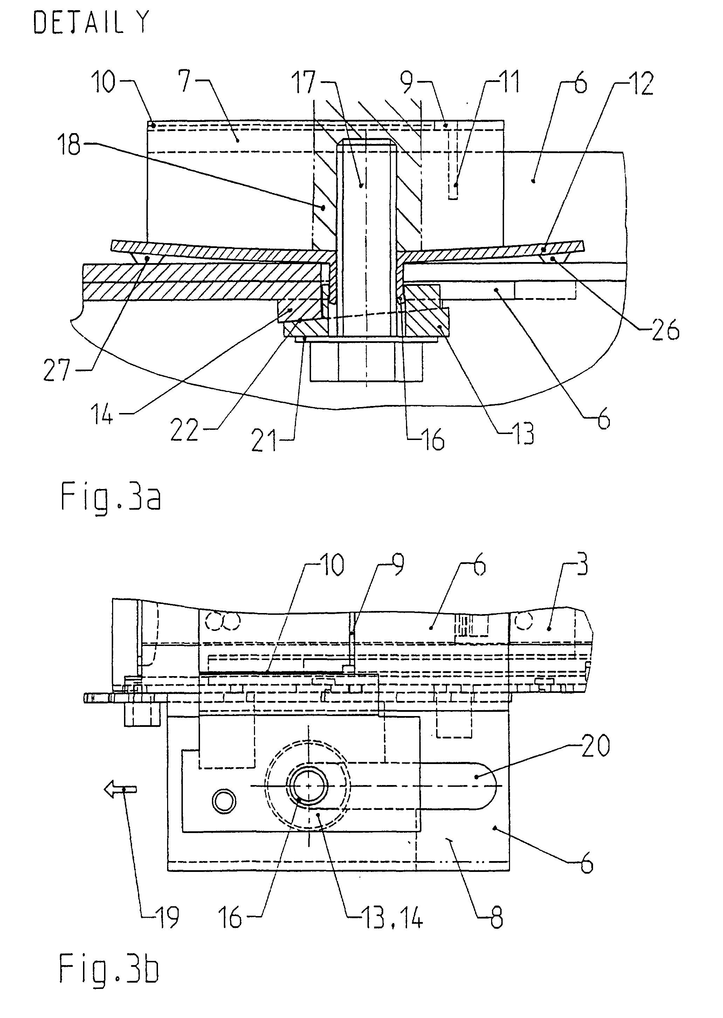

Der Gleitschuh 13 wird, wie in Figur 3a dargestellt, so ausgeführt, dass ein Teil davon im Laufschlitz 20 beim Verschieben der Konsole 6 gegenüber dem Gleitschuh 13 verdrehsicher gleiten kann. Die Keilflächen 22 zwischen dem Keilschuh 14 und dem Gleitschuh 13 bewegen sich hierbei, wenn sie als Losbrechelement ausgeführt sind, auseinander und die Verklemmung wird losgebrochen, wobei dann die Haltekraft bzw. die Energieabsorption durch den Aufreissstreifen bestimmt wird.

Der Haltebügel 7 ist im Befestigungsbereich mit Vorteil beidseitig als Blechzunge ausgeführt, welche zwischen dem Chassis 18 und der Gleitflanschfläche 8 der Konsole 6 liegt und durch die Verschraubung 17 ortsfest gegenüber dem Chassis 18 ebenfalls festgeklemmt wird. Im Aufprallfall verschiebt sich somit die Konsole 6 maximal entsprechend der Laufschlitzlänge 20 gemeinsam mit dem Keilschuh 14, welcher sich somit von dem stationären Gleitschuh 13 wegbewegt, wobei der Reissbügel 7 ebenfalls stationär verbleibt und die Reisslasche 9, welche an einem Konsolenteil 6 fixiert ist, aufgerissen wird. Um eine spielfreie Verbindung zwischen Gleitschuh 13 und dem Reissbügel 7 herzustellen, wird die Bohrung im Haltebügel 7 mit Vorteil so mit einem Bördel 16 versehen, dass der Gleitschuh 13 mit dem Bördel 16 zusammengeführt wird, wie dies auch aus der Figur 2a ersichtlich ist. In der Aufsicht ist diese Anordnung in Figur 3b dargestellt, wo der Laufschlitz 20 ersichtlich ist. Werden, wie dies in Figur 3a dargestellt ist, Erhebungen 26, 27 zwischen den Gleitflächen 8,12 vorgesehen, sind diese Flächen auf Distanz gehalten und können im Klemmbereich zusammengedrückt werden, was eine elastische Biegeverspannung der Teile bewirkt. Diese Biegeverspannung erhöht die Stabilität der Anordnung wesentlich. Dadurch kann materialsparender und kleiner gebaut werden. Die Erhebungen 26, 27 können einseitig entweder Konsolenseitig oder Haltebügelseitig vorgesehen werden oder auch als Zwischenlage. Sie müssen gegenüber der Klemmbefestigung 17 so beabstandet sein, dass eine federnde Verspannung möglich wird. Die Erhebungen 26, 27 können beispielsweise noppenartig ausgebildet sein. Die Methode der Biegeverspannung kann auch bereits bei Anordnungen ohne die Vorerwähnten Losbrechelemente 22,26,27 vorteilhaft eingesetzt werden. Eine Kombination ermöglicht aber eine besonders wirtschaftliche Realisierung.

Eine weitere Verbesserung der Reproduzierbarkeit des Losbrechverhaltens kann erreicht werden, indem die Klemmflächen 22, das heisst die geneigte Gleitschuhfläche 13 und die Keilschuhfläche 14 definiert oberflächenbehandelt wird. Dies kann beispielsweise dadurch erfolgen, dass die Oberflächen gezielt aufgerauht und/oder beschichtet werden und/oder auch geschmiert werden.

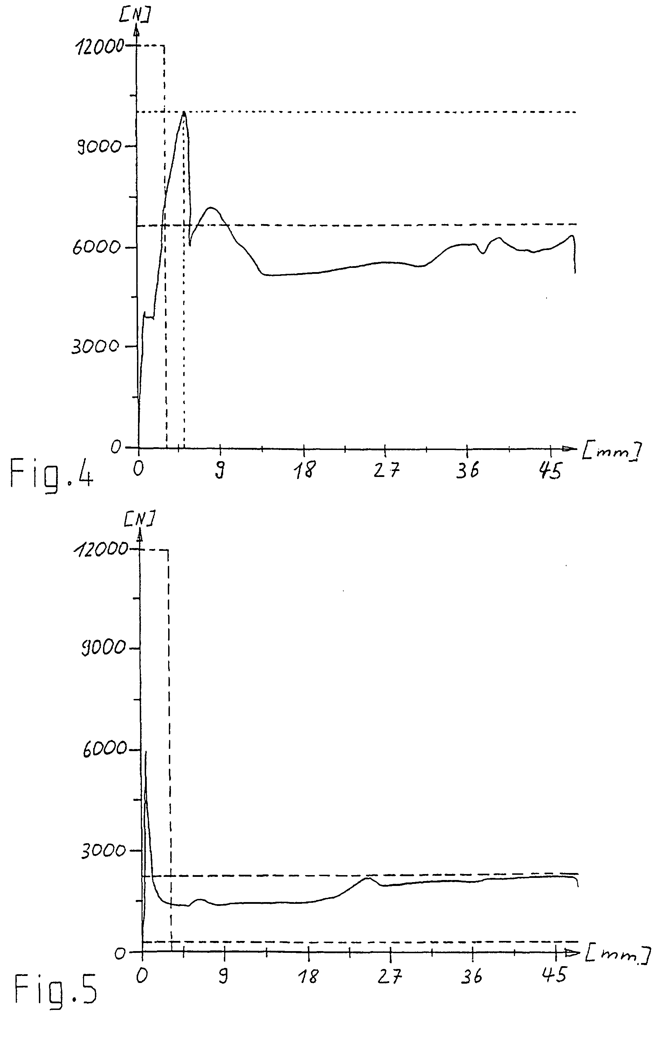

Das Anzugsmoment der Klemmschrauben wird mit Vorteil mit Drehmomentüberwachung im Bereich von 15 bis 35 Nm eingestellt. In Figur 4 ist in einem Losbrechdiagramm das gemessene Verhalten der Losbrechkraft über einen Weg von 45 mm dargestellt, wobei die Verschraubung mit einem Drehmoment von 25 Nm erfolgte. Daraus ist ersichtlich, dass die Losbrechkraft über 9000 N betrug und erst nach einem längeren Weg von etwa 5 mm abfällt, wobei aber eine relativ hohe Restklemmkraftwirkung von etwa 6000 N undefiniert verbleibt bis der Weg von 45 mm abgearbeitet worden ist. Unter denselben Messbedingungen wird in Figur 5 das erfindungsgemässe Verhalten gezeigt mit einer Anordnung gemäss Figur 1. Die Verschraubung wurde ebenfalls mit 25 Nm Drehmoment eingestellt. Die Losbrechkraft erreicht 6000 N und fällt steil und definiert nach etwa 1 mm Weg sofort ab, um nachher auf tiefem Niveau mit Losbrechelementen mit geneigten Flächen unter 2000 N gleichförmig über den ganzen Weg von 45 mm zu verbleiben. Bei der erfindungsgemässen Anordnung wird also nach dem kurzen Losbrechvorgang die Absorptionsenergie definiert, reproduzierbar und vorgebbar durch das Absorptionselement wie vorzugsweise eine Aufreisslasche bestimmt, beispielsweise mit Energieabsorptionskräften von 1200 bis 5500 N vorgegeben wird.

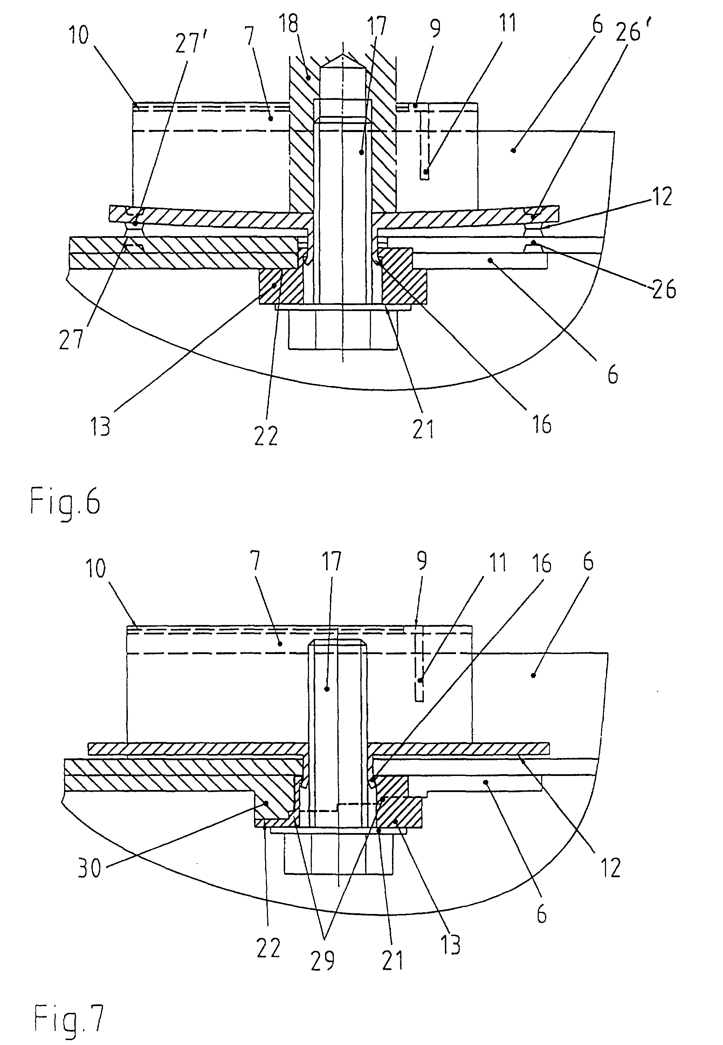

Eine weitere sehr geeignete Möglichkeit, ein Losbrechelement zu realisieren, wie in Figur 6 dargestellt, besteht darin, wenn beispielsweise zwischen den Gleitflächen 8, 12 Erhebungen 26, 27 angeordnet werden, um die Gleitflächen in der Ausgangsposition in einem geringen Abstand von einigen Zehnteln mm bis ca 3mm zu halten. Die Erhebungen 26,26' 27,27' sind beidseitig der Gleitflächen im Wesentlichen symmetrisch so anzuordnen, dass dort, wo die Erhebungen zusammengeklemmt aufeinander liegen, kurze Gleitflächen 12 entstehen, welche im Verschiebefall, das heisst im Crashfall, voneinander runtergleiten und so auf eine kurze Distanz im mm-Bereich die Klemmkraftwirkung aufheben, womit dann die Energieabsorption vom Absorptionselement 7, 9, 11 definiert übernommen wird. Solche Erhebungen können beispielsweise noppenartig ausgebildet werden und beidseitig in Wellenachsenlängsrichtung der Verschraubung 17 angeordnet werden. Es können aber auch mehrere noppenartige Erhebungen nebeneinander oder hintereinander und weiter abgetreppt oder auch auf einer schiefen Ebene liegend angeordnet werden, je nach Anforderung der Klemmkräfte, der Reibungskräfte und der Verschiebewege beziehungsweise der Dimensionierung der gesamten Anordnung. Im vorliegenden Fall wird der Gleitschuh 13 beispielsweise als einfache Beilagscheibe realisiert. Es ist aber auch möglich, diese noppenartigen Ausbildungen im Bereich des Gleitschuh 13 vorzusehen. Diese Anordnung eines Losbrechelementes kann auf einfache Art so dimensioniert werden, dass sie biegeverspannt montiert werden kann, wie dies in Figur 6 dargestellt ist.

In Figur 7 ist eine weitere äusserst vorteilhafte und einfach zu realisierende Ausführung eines Losbrechelementes dargestellt. Bei dieser Ausführung werden die aneinaderliegenden, geklemmten Flächen des Gleitschuh 13 und des ursprünglichen Keilschuh 14,30 nicht keilförmig ausgeführt, sondern treppenartig ausgebildet. Die Stufenweite der treppenartigen Ausbildung 29 definiert hierbei den Losbrechweg. Diese Ausführung ist besonders einfach und kostengünstig realisierbar. Die vorerwähnten verschiedenen Typen der Losbrechelemente können untereinander auch in kombinierter Form verwendet werden. Auch diese Anordnung kann mit Vorteil mit Distanzelementen 26, 27 zur Biegeverspannung kombiniert werden.

Die Lenksäule 25 kann durch eine erfindungsgemässe, biegeverspannte Halteanordnung grössere Kräfte Fᵥ aufnehmen bzw. die Querauslenkung f₁,f₂ ist bei entsprechender Krafteinwirkung auf das Steuerrad 2 geringer. In Figur 1a ist eine Lensäulenanordnung 25 für den entsprechenden Messaufbau dargestellt. Die Lenksäule 25 ist hierbei an zwei Stellen 23, 24 am Chassis 18 befestigt.

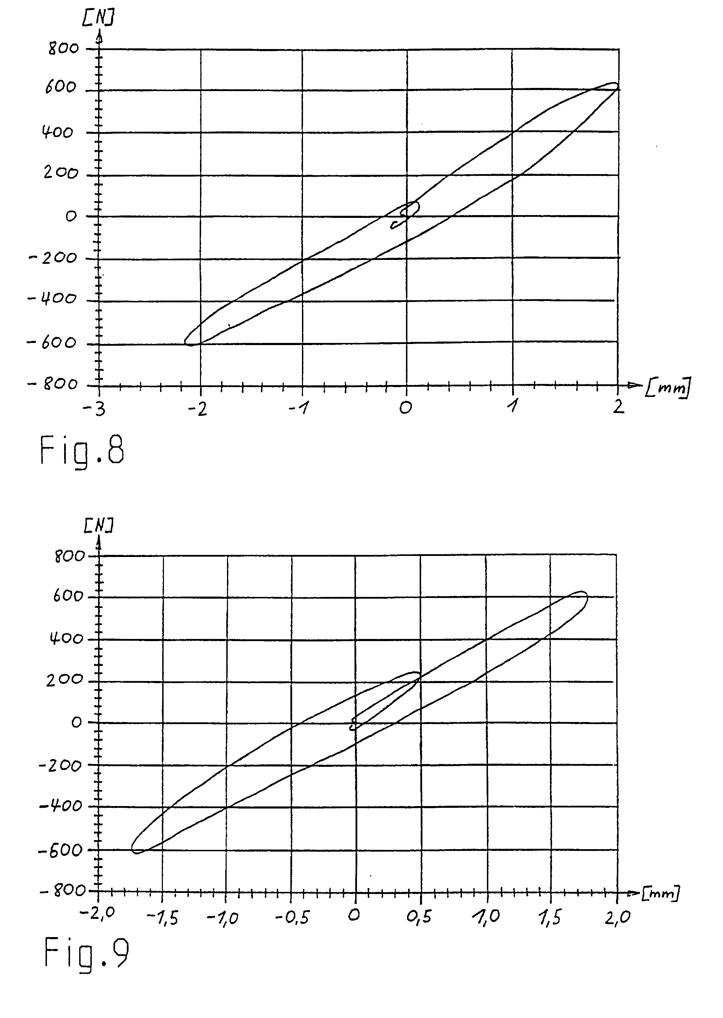

Bei einer vertikalen Krafteinwirkung Fᵥ von 600 N an der Welle beim Steuerrad 2 werden mit dem Richttest, bei Ausführungen gemäss Stand der Technik, Auslenkungen f₁,f₂ von ± 2mm gemessen, wie dies im Diagramm in Figur 8 dargestellt ist. Bei einer erfindungsgemässen Halteanordnung mit Biegeverspannung können auch mit Blechkonstruktionen, unter gleichen Messbedingungen ohne weiteres Auslenkwerte von: weniger als ± 2mm erreicht werden, was den heute geforderten harten Spezifikationen entspricht. Figur 9 zeigt Auslenkwerte von weniger als ± 1,8mm , bei derselben Krafteinwirkung und der erfindungsgemässen Ausführung mit Biegeverspannung.

## Patentansprüche

1. Lenkvorrichtung für Kraftfahrzeuge mit einer Lenkwelle, die von einem Führungskasten (3) geführt ist, welcher mit einer Konsole (6) geklemmt verbunden ist, wobei die Konsole (6) mindestens eine Gleitfläche (8) entlang der Lenkwellenachse (1) aufweist, welche im Crashfall einen Verschiebeweg (20) gegenüber dem Chassis (18) zulässt und Klemmmittel (13, 16, 17) vorgesehen sind zur axialen Halterung der Konsole (6) am Chassis (18) in der Ausgangsposition des Verschiebeweges (20) und weitere Mittel (26, 27) im Bereich der Klemmmittel (13, 16, 17) vorgesehen sind, so dass die Konsole (6) gegenüber diesen und dem Chassis (18) federelastisch vorgespannt ist **dadurch gekennzeichnet, dass** die weiteren Mittel ein Distanzelement (26, 27) umfassen, welches zwischen der Konsolengleitfläche (8) und einer gegenüberliegenden Gleitfläche (12) angeordnet ist und dieses von den Klemmmitteln (13, 16, 17) in einer Ebene parallel zum Verschiebeweg beabstandet ist derart, dass die Konsole (6) im Klemmbereich durch Biegeverspannung federelastisch vorgespannt ist.

2. Vorrichtung nach Anspruch 1 **dadurch gekennzeichnet, dass** die Klemmmittel (7, 17, 21) eine Verschraubung (17) aufweisen, vorzugsweise je eine Verschraubung (17) beidseitig zur Lenkwellenachse (1), vorzugsweise mit einem Anzugsmoment von 20 bis 30 Nm.

3. Vorrichtung nach Anspruch 2 **dadurch gekennzeichnet, dass** Distanzelemente (26, 27) in Lenkwellenachsenrichtung (1) beidseitig zur Verschraubung (17) vorgesehen sind, vorzugsweise mindestens eines länglich und/oder je Seite mehrere.

4. Vorrichtung nach Anspruch 3 **dadurch gekennzeichnet, dass** das Distanzelement als Erhebung, beispielsweise als Noppe, (26, 27) ausgebildet ist, vorzugsweise in einem Haltebügel (7) mit Aufreissstreifen (9,10) und/oder in der Konsolengleitfläche (8) eingedrückt ist.

5. Vorrichtung nach einem der vorhergehenden Ansprüche **dadurch gekennzeichnet, dass** in mindestens einem Teilbereich der Ausgangsposition die Klemmmittel (13, 16, 17,) ein Losbrechelement (13, 14, 29, 30) mit einer Klemmfläche (22) enthalten, so dass bei einer Verschiebung der Konsole in Lenkwellenachsenrichtung (19) die Klemmkraft verringert wird.

6. Vorrichtung nach Anspruch 5 **dadurch gekennzeichnet, dass** das Losbrechelement (13, 14, 29, 30) eine abgetreppte Klemmfläche (29, 22) aufweist, vorzugsweise mit mindestens 2 Stufen (29).

7. Vorrichtung nach Anspruch 5 **dadurch gekennzeichnet, dass** das Losbrechelement (13, 14, 29, 30) zwischen der Gleitfläche (8) und dem Chassis (18) paarweise in der Ausgangsposition übereinander liegende Erhebungen (26, 26', 27, 27') aufweist, so dass die konsolenseitige Erhebung (26, 27) im Verschiebefall von der chassisseitigen Erhebung (26', 27') heruntergleitet.

8. Vorrichtung nach Anspruch 7 **dadurch gekennzeichnet, dass** mindestens zwei Erhebungspaare (26, 26', 27, 27') vorgesehen sind und dass in Lenkwellenachsenrichtung (1) das Klemmmittel (17) dazwischen liegt, wobei die Erhebungen (26, 26', 27, 27') vorzugsweise noppenartig ausgebildet sind, wobei vorzugsweise die zwischen den Erhebungen liegenden Flächen (12) geneigt, insbesondere auf einer geneigten Fläche liegend, ausgebildet sind.

9. Vorrichtung nach einem der vorhergehenden Ansprüche **dadurch gekennzeichnet, dass** die Konsole (6) über einen gegenüber dem Chassis (18) ortsfesten Energieabsorptionselement (9, 10) verbunden ist, vorzugsweise mit einem Aufreissstreifen (9, 10).

10. Vorrichtung nach einem der vorhergehenden Ansprüche **dadurch gekennzeichnet, dass** die Konsole (6) den Führungskasten (3) klemmt und beidseitig Gleitflächen (8) und Mittel (13, 16, 17) zur Klemmbefestigung am Chassis (18) aufweist, wobei diese Klemmbefestigung vorzugsweise geschraubt ist.

11. Vorrichtung nach einem der vorhergehenden Ansprüche **dadurch gekennzeichnet, dass** der Haltebügel (7) eine Gleitfläche (7, 12) aufweist und diese vorzugsweise zwischen Chassis (18) und Konsolengleitfläche (6, 8) liegt.

12. Vorrichtung nach einem der vorhergehenden Ansprüche **dadurch gekennzeichnet, dass** die Klemmflächen (22) als scheiben förmiges Teil ausgebildet sind, wobei die obere Scheibe (14) an der Konsole (6) fixiert ist und die untere Scheibe (13) als Gleitschuh (13) mit den Klemmmitteln ortsfest am Chassis (18) gehalten wird.

13. Vorrichtung nach einem der vorhergehenden **Ansprüche dadurch gekennzeichnet, dass** die Gleitfläche (8) in der Konsole (6) einen Laufschlitz (20) zur geführten Aufnahme von Klemmmittelteilen (16, 17, 13) aufweist.

14. Vorrichtung nach einem der vorhergehenden Ansprüche **dadurch gekennzeichnet, dass** mindestens eine der Klemmflächen (22) oberflächenbehandelt ist, wie beschichtet, aufgerauht oder geschmiert ist.

15. Vorrichtung nach einem der vorhergehenden Ansprüche **dadurch gekennzeichnet, dass** die Konsole (6) als Blechteil ausgeführt ist, vorzugsweise als Biege- oder Stanzteil.

16. Vorrichtung nach einem der vorhergehenden Ansprüche **dadurch gekennzeichnet, dass** das Energieabsorptionselement (9, 10) als Haltebügel (7) mit Aufreissstreifen (9,10) ausgebildet ist und vorzugsweise ortsfest direkt am Chassis (18) mit Klemmmitteln (17) fixiert ist und verbindend verstemmt ist.

## Claims

1. Steering device for motor vehicles with a steering shaft which is guided via a guide box (3) which is connected clamped to a console (6), where the console (6) has at least one sliding surface (8) along the steering shaft axis (1) which in the event of a crash allows a displacement path (20) in relation to the chassis (18), and clamping means (13, 16, 17) are provided for axial retention of the console (6) on the chassis (18) in the initial position of the displacement path (20), and further means (26, 27) are provided in the area of the clamping means (13, 16, 17) so that the console (6) is resiliently pretensioned in relation to these and the chassis (18), **characterised in that** the further means comprise a spacer element (26, 27) which is arranged between the console sliding surface (8) and an opposite sliding surface (12) and is spaced from the clamping means (13, 16, 17) in a plane parallel to the displacement path such that the console (6) is pretensioned resiliently in the clamping area by flexural warping.

2. Device according to claim 1, **characterised in that** the clamping means (7, 17, 21) have a screw fitting (17), preferably a screw fitting (17) on both sides of the steering shaft axis (1), preferably with a tightening torque of 20 to 30 Nm.

3. Device according to claim 2, **characterised in that** spacer elements (26, 27) are provided on both sides of the screw fitting (17) in the steering shaft axial direction (1), preferably at least one oblong element and/or several elements per side.

4. Device according to claim 3, **characterised in that** the spacer element is formed as a protrusion for example a knob (26, 27) preferably pressed into a retaining bracket (7) with tear strips (9, 10) and/or in the console sliding surface (8).

5. Device according to any of the previous claims, **characterised in that** in at least one part area of the starting position of the clamping means (13, 16, 17), a break-free element (13, 14, 29, 30) is provided with a clamping surface (22) so that on displacement of the console in the steering shaft axial direction (19), the clamping force is reduced.

6. Device according to claim 5, **characterised in that** the break free element (13, 14, 29, 30) has a stepped clamping surface (29, 22) preferably with at least two steps (29).

7. Device according to claim 5, **characterised in that** the break-free element (13, 14, 29, 30) between the sliding surface (8) and the chassis (18) has protrusions (26, 26', 27, 27') lying above each other in pairs in the starting position so that in the event of displacement, the protrusion (26, 27) on the console side slides over the protrusion (26', 27') on the chassis side.

8. Device according to claim 7, **characterised in that** at least two protrusion pairs (26, 26', 27, 27') are provided and that the clamping means (17) lie between these in the steering shaft axial direction (1), the protrusions (26, 26', 27, 27') preferably being formed as knobs, where preferably the surfaces lying between the protrusions (12) are form sloping, in particular lying on a sloping surface.

9. Device according to any of the previous claims, **characterised in that** the console (6) is connected via an absorption element (9, 10) stationary in relation to the chassis (18), preferably with a tear strip (9, 10).

10. Device according to any of the previous claims, **characterised in that** the console (6) clamps the guide box (3) and on both sides has sliding surfaces (8) and means (13, 16, 17) for clamp-fixing to the chassis (18), where the clamp-fixing is preferably screwed.

11. Device according to any of the previous claims, **characterised in that** the retaining bracket (7) has a sliding surface (7, 12) which lies preferably between the chassis (18) and the console sliding surface (16).

12. Device according to any of the previous claims, **characterised in that** the clamping surfaces (22) are formed as a disc-like part, where the upper disc (14) is fixed to the console (6) and the lower disc (13) as a sliding shoe (13) is held stationary on the chassis (18) by the clamping means.

13. Device according to any of the previous claims, **characterised in that** the sliding surface (8) on the console (6) has a run slot (20) for guided holding of the clamping means components (16, 17, 13).

14. Device according to any of the previous claims, **characterised in that** at least one of the clamping surfaces (22) is surface-treated e.g. coated, roughened or lubricated.

15. Device according to any of the previous claims, **characterised in that** the console (6) is designed as a sheet metal part, preferably as a bent or punched part.

16. Device according to any of the previous claims, **characterised in that** the energy absorption element (9, 10) is formed as a retaining bracket (7) with tear strips (9, 10) and is preferably fixed stationary directly to the chassis (18) with clamping means (17) and by a weld connection.

## Revendications

1. Dispositif de direction pour véhicules automobiles qui comporte un arbre de direction qui est guidé par un caisson de guidage (3) relié par serrage à une console (6), dans lequel la console (6) présente le long de l'axe (1) de l'arbre de direction au moins une surface de glissement (8) qui permet, en cas de collision, un trajet de coulissement (20) par rapport au châssis (18), dans lequel des moyens de serrage (13, 16, 17) sont prévus pour maintenir axialement la console (6) contre le châssis (18) dans la position initiale du trajet de coulissement (20) et dans lequel des moyens supplémentaires (26, 27) sont prévus dans la zone des moyens de serrage (13, 16, 17), de sorte que la console (6) est précontrainte en déformation élastique par rapport à ces derniers et par rapport au châssis (18), **caractérisé en ce que** les moyens supplémentaires incluent une entretoise (26, 27) qui est agencée entre la surface de glissement (8) de la console (6) et une surface de glissement (12) située à l'opposé, et **en ce que** cette entretoise se trouve, dans un plan parallèle au trajet de coulissement, espacée des moyens de serrage (13, 16, 17), de manière telle que dans la zone de serrage la console (6) est précontrainte en déformation élastique par flexion.

2. Dispositif selon la revendication 1, **caractérisé en ce que** les moyens de serrage (7, 17, 21) comportent une attache par vissage (17), de préférence une attache par vissage de chaque côté de l'axe (1) de l'arbre de direction, de préférence à couple de serrage de 20 à 30 Nm.

3. Dispositif selon la revendication 2, **caractérisé en ce que** des entretoises (26, 27) sont prévues des deux côtés de l'attache par vissage (17) dans le sens axial (1) de l'arbre de direction, de préférence au moins une d'entre elles agencée longitudinalement et/ou plusieurs de chaque côté.

4. Dispositif selon la revendication 3, **caractérisé en ce que** l'entretoise consiste en un élément en relief, par exemple une nope (26, 27) qui est de préférence réalisée par empreinte dans un étrier de maintien (7) muni d'une bande de déchirage (9, 10) et/ou dans la surface de glissement (8) de la console (6).

5. Dispositif selon l'une quelconque des revendications précédentes, **caractérisé en ce que** les moyens de serrage (13, 16, 17) comportent, dans au moins une zone partielle de la position initiale, un élément de détachement par rupture (13, 14, 29, 30) qui inclut une surface de serrage (22), de sorte que la force de serrage est réduite lors d'un coulissement de la console dans le sens (19) de l'axe de l'arbre de direction.

6. Dispositif selon la revendication 5, **caractérisé en ce que** l'élément de détachement par rupture (13, 14, 29, 30) comporte une surface de serrage (29, 22) à gradins, incluant de préférence au moins deux paliers (29).

7. Dispositif selon la revendication 5, **caractérisé en ce que** l'élément de détachement par rupture (13, 14, 29, 30) comporte, entre la surface de glissement (8) et le châssis (18), des éléments en relief (26, 26', 27, 27') par paires superposés dans la position initiale, de sorte que, en cas de coulissement, l'élément en relief (26, 27) du côté console descend en glissant de l'élément en relief (26', 27') du côté châssis.

8. Dispositif selon la revendication 7, **caractérisé en ce qu'**il est prévu au moins deux paires d'éléments en relief (26, 26', 27, 27') et **en ce que** le moyen de serrage (17) est disposé entre elles dans le sens axial (1) de l'arbre de direction, les éléments en relief (26, 26', 27, 27') étant de préférence réalisés en forme de nopes, la configuration des surfaces (12) situées entre les nopes étant de préférence inclinée, en particulier reposant sur une surface inclinée.

9. Dispositif selon l'une quelconque des revendications précédentes, **caractérisé en ce que** la console (6) est reliée, par l'intermédiaire d'un élément d'absorption (9, 10) fixe par rapport au châssis (18), de préférence à une bande de déchirage (9, 10).

10. Dispositif selon l'une quelconque des revendications précédentes, **caractérisé en ce que** la console (6) serre le caisson de guidage (3) et comporte des deux côtés des surfaces de glissement (8) et des moyens (13, 16, 17) de fixation par serrage sur le châssis (18), cette fixation par serrage étant de préférence un assemblage par vissage.

11. Dispositif selon l'une quelconque des revendications précédentes, **caractérisé en ce que** l'étrier de maintien (7) comporte une surface de glissement (7, 12) et **en ce que** celle-ci est de préférence située entre le châssis (18) et la surface de glissement (8) de la console (6).

12. Dispositif selon l'une quelconque des revendications précédentes, **caractérisé en ce que** les surfaces de serrage (22) constituent des éléments en forme de disque, le disque supérieur (14) étant fixé à la console (6) et le disque inférieur (13) étant, en tant que patin de glissement (13), maintenu de façon fixe sur le châssis (18) par les moyens de serrage.

13. Dispositif selon l'une quelconque des revendications précédentes, **caractérisé en ce que** la surface de glissement (8) dans la console (6) comporte une fente de glissement (20) pour recevoir en les guidant des parties de moyens de serrage (16, 17, 13).

14. Dispositif selon l'une quelconque des revendications précédentes, **caractérisé en ce qu'**au moins une des surfaces de serrage (22) a fait l'objet d'un traitement de surface tel qu'un revêtement, un grattage ou une lubrification.

15. Dispositif selon l'une quelconque des revendications précédentes, **caractérisé en ce que** la console (6) est réalisée en tôle, de préférence par pliage ou emboutissage.

16. Dispositif selon l'une quelconque des revendications précédentes, **caractérisé en ce que** l'élément d'absorption d'énergie (9, 10) est réalisé en tant qu'étrier de maintien (7) muni de bandes de déchirage (9, 10) et **en ce qu'**il est de préférence fixé directement sur le châssis (18) par des moyens de serrage (17), de façon à être stationnaire, et retenu par matage.
